# EUROPEAN PATENT SPECIFICATION

(11) **EP 0 329 251 B1**
(45) Date of publication and mention of the grant of the patent: **25.08.1993**
(21) Application number: 89200364.1
(22) Date of filing: 14.02.1989
(51) Int. Cl.: C01B 31/12, F02B 43/00

(54) **Process for the preparation of activated carbon**
Verfahren zur Herstellung von Aktivkohle
Procédé de préparation de charbon actif

(30) Priority: 15.02.1988 GB 8803404
(43) Date of publication of application: 23.08.1989
(73) Proprietor: SHELL INTERNATIONALE RESEARCH MAATSCHAPPIJ B.V., 2596 HR Den Haag (NL)
(72) Inventor: Rodriguez-Reinoso, Francisco, Universidad de Alicante Alicante (ES); Buss, Grahame Yarvic, Didsbury Manchester M20 ORF (GB)

(56) References cited:
- DD-A- 231 328
- GB-A- 302 774
- US-A- 2 508 474
- US-A- 4 082 694
- CHEMICAL ABSTRACTS, vol. 104, no. 10, March 1986, page 136, abstract no. 71160d, Columbus, Ohio, US; & JP-A-60 161 316 (PENTEL CO., LTD) 23-08-1985
- I.E.C. PRODUCT RESEARCH AND DEVELOPMENT, vol. 23, no. 2, June 1984, pages 266-269, American Chemical Society, Washington, US; F. RULZ BEVLA et al.: "Activated carbon from almond shells. Chemical activation. 1. Activating reagent selection and variables influence"
- I.E.C. PRUDUCT RESEARCH AND DEVELOPMENT, vol. 23, no. 2, June 1984, pages 269-271, American Chemical Society, Washington, US; F. RULZ BEVLA et al.: "Activated carbon from almond shells. Chemical activation. 2. ZnCl/2 activation temperature influence"
- CHEMICAL ABSTRACTS, vol. 92, no. 10, March 1980, page 443, abstract no. 83171e, Columbus, Ohio, US; && IN-A-143 332 (COUNCIL OF SCIENTIFIC AND INDUSTRIAL RESEARCH (INDIA)), 05-11-1977
- CHEMICAL ABSTRACTS, vol. 92, no. 10, March 1980, page 443, abstract no. 83170d, Columbus, Ohio, US; && IN-A-143 333 (COUNCIL OF SCIENTIFIC AND INDUSTRIAL RESEARCH (INDIA)) 05-11-1977

## Description

The application relates to a process for the preparation of activated carbon from carbonaceous cellulose materials.

Activated carbon can be prepared in a carbonization process (pyrolysis process) from a large number of different carbon-containing source materials, usually but not necessarily followed by an activation process (controlled oxidation). The adsorptive power of the ultimate product depends, among other factors, on the source material, as well as on the preparation procedure employed.

The carbonization process is usually conducted by heating the carbonaceous material in the absence of air at temperatures between 400 and 900 °C. In one known procedure, dehydrating salts, such as calcium chloride, magnesium chloride and zinc chloride, are used in the carbonization step. The dehydrating salt is mixed with the source material, e.g. wood, cellulose, peat etc., together with sufficient water to wet the entire mass thoroughly, after which it is dried and carbonized between 400 and 900 °C. The finished carbon is washed with water and acid, and the dehydrating salt may be recovered from the washings.

Although activated carbon prepared under suitable pyrolysis conditions can be used without further processing for some applications, usually the char is subsequently subjected to the action of an oxidizing agent, such as air, steam or carbon dioxide, at high temperatures.

Activated carbon can be used for many purposes, such as treating waste water, removing contaminants and purifying process streams. These purposes are all more or less related to the adsorption features of the carbon. At the present moment there is a growing interest in the use of activated carbon for gas adsorption, especially for the adsorption of methane (natural gas).

Methane is an excellent fuel for internal-combustion engines. It has high anti-knock value and produces an exhaust gas which is particularly free from toxic, noxious or otherwise detrimental components. Methane is gaseous at room temperature and low pressure. A particular problem is therefore encountered in the use of methane for internal-combustion engines for automotive vehicles, namely the safe storage of the methane in a sufficient amount to permit widespread use. Methane cannot be stored in a sufficient amount in a limited space to power the vehicle except under very high pressures and/or low temperatures. Such high pressures are dangerous and low temperatures are difficult to maintain in vehicles.

In German patent applications DE-2,302,403 and DE-2,923,561, methods are described to store, among others, methane, for use in powering automotive combustion engines, by providing a tank or vessel with an adsorbent for the gas. The adsorbent, e.g. molecular sieves, silica or coke, is capable of adsorbing methane at low pressures. The stored gas volume in DE-2,302,403 can be increased by 78% at a pressure of 70 bar which could be raised still higher for a further augmentation of storage capacity. This result, however, is not very attractive. In DE-2,923,561 a methane storage system is described using binder-free compacts of zeolites. A much higher methane-adsorption is obtained in this system. A disadvantage, however, of this system is the relatively expensive adsorption compound.

Activated carbon having a high surface area, and thus a high adsorption capacity, is already known from U.S. patent 4,082,694. However, the activated carbon obtained in the process described in this patent has a very small particle size, which makes its use as a methane storage compound impracticable, as withdrawal of the methane from the storage compartment would also result in withdrawal of small carbon particles, and plugging of the lines may be expected. It is of course possible to pelletise the small carbon particles; however this will make the carbon more expensive and usually this will influence its adsorption capacity in a negative way, for example by introducing an unwanted binder material. Further, some small carbon particles may become free, due, for instance, to shaking, resulting in the above-mentioned problems.

The article "Activated carbon from almond shells. Chemical Activation. 2. ZnCl₂ activation temperature variables influence" by Bevlá et alia (Ind. Eng. Chem. Prod. Res. Dev. 1984, vol 23 pp 269-271) describes carbon particles of 1.41 to 2.00 mm. diameter which were activated by a 2 hour heat-treatment at 300 to 700°C after 25% ZnCl₂ impregnation of the precursor almond shells.

It has now been found that a relatively inexpensive methane adsorber having a very high methane adsorption capacity can be obtained by carbonization and activation of carbonaceous cellulose materials, for instance peach stones, olives stones and almond shells. The present application, therefore, relates to a process for the preparation of activated carbon, comprising providing carbonaceous cellulose material in a form having an average particle size of 1 to 3 mm, treatment of the material with an aqueous zinc chloride solution containing 0.25 to 4 parts by weight of anhydrous zinc chloride with respect to the amount of carbonaceous material, volume reduction of the mixture, carbonization in an inert atmosphere at 400-700 °C, removal of zinc chloride, and subsequent recovery of a dry granular activated carbon product in which process 20-95% of the amount of water is evaporated whereby an even distribution of the zinc chloride in the carbonaceous material is obtained.

Preferably, the removal of zinc chloride is followed by activation at 700-1000 °C in an oxidizing atmosphere.

The activated carbon obtainable in the process of the present invention has a very high surface area (for example 2500 m²/g or more (BET, in N₂)), together with a relatively high density (for example about 0.35 g/cm³) and is highly microporous. Further the hard and granular particles have a relatively large particle size. The material is very pure and is resistant to dusting. These features make the activated carbon obtained according to the process of the invention highly suitable for use as a methane adsorbent, especially to be used for internal combustion engines of automotive vehicles. The material is also suitable for the adsorption of gasoline and other hydrocarbon vapours.

Thus, according to a further aspect of the invention, there is provided a granular microporous activated carbon having a surface area of at least 1800 m²/g and a bulk density of at least 0.35 g/cm³.

Suitable carbonaceous cellulose materials for use as precursor for the process of the invention are fruit pits, nut shells, cereals, wood, sawdust, peat etc. Preferably fruit pits and nut shells are used, more preferably peach stones, olive stones and almond shells, most preferably peach stones.

The precursor materials are crushed into small particles, suitably 1 to 3 mm average particle size, especially 1.7-2.8 mm.

The (crushed) precursor materials are advantageously washed with water, or more especially with an acidic aqueous solution, to remove residual organic matter and mineral matter. Suitable acidic solutions are for instance aqueous solutions of sulphuric acid, hydrochloric acid, hydrobromic acid, phosphorous acid, phosphoric acid and nitric acid. Organic acids such as formic acid and acetic acid may also be used.

Suitable concentrations of the acid may vary between 1 and 20%, more especially between 5 and 15%. A suitable washing time varies between 1 and 24 hours, more especially between 2 and 8 hours. The temperature is suitably chosen between 10 and 40 °C, more especially between 15 and 25 °C.

The aqueous zinc chloride solution used for impregnation of the carbonaceous precursor suitably contains between 50 and 5000 g/l ZnCl₂_{,} especially between 250 and 2500 g/l, more especially between 400 and 1000 g/l. The amount of anhydrous zinc chloride with regard to the carbonaceous precursor is between 0.25 and 4 (w/w), more especially between 0.5 and 2. It is preferred to use a ratio of about 1. The temperature of the treatment varies preferably between 50 and 200 °C, more preferably between 70 and 160 °C. The reaction time is usually between 3 and 20 hours, preferably between 5 and 8 hours. The volume reduction of the reaction mixture after the zinc chloride treatment by partial evaporation of the water is suitably carried out by heating the reaction mixture to its boiling point and evaporating 20-95% of the amount of water, preferably 40-90% of the amount of water, more preferably 50-75% of the amount of water. It will be understood that the volume reduction is carried out to the extent necessary to ensure that the zinc chloride is evenly distributed in the carbonaceous material.

After the volume reduction the residue is filtered and dried. Drying may be performed at elevated temperature, e.g. 80-120 °C, during a sufficiently long period, e.g. 3-12 hours.

The carbonization step is carried out at temperatures between 400 and 700 °C, preferably about 500 °C, under an inert atmosphere, e.g. nitrogen or argon. The reaction time may vary between 1 h and 200 h, preferably between 2 h and 50 h, more preferably between 1 and 6 h. The temperature is preferably increased at a rate of between 1 and 7 °C/min, more preferably between 2 and 5 °C/min. The reaction mixture obtained after the carbonization step is washed with water to remove the zinc chloride. Preferably an acidic aqueous solution is used to remove also basic zinc compounds. A suitable acid is hydrochloric acid. The washings are continued until the zinc chloride is completely removed. The washings are preferably carried out between 30 and 50 °C.

Preferably, an activation step of the carbonaceous material obtained after carbonization is carried out at a high temperature using a steam or carbon dioxide atmosphere. The temperature is preferably increased at a rate of between 1 and 12 °C/min, more preferably between 2 and 10 °C/min.

The temperature during the activation procedure may vary between 700 and 1000 °C, preferably between 780 and 900 °C. The reaction time may vary between 10 h and 500 hrs, preferably between 15 and 400 hrs depending on the precursor, e.g. a minimum of 30 h for peach stones and 15 h for almonds.

The invention is illustrated by the following Examples, although it will be understood that the invention is not limited thereto.

### Example I

### Preparation of activated carbon from peach stones.

Peach stones were carefully cleaned and washed, and ground into small particles, having an average size of 1.7-2.0 mm. The particles were washed with an aqueous sulphuric acid solution (10%) for six hours, and thereafter with distilled water until zero acid removal, followed by drying at ambient temperature.

The particles were impregnated with a zinc-chloride solution (100 g ZnCl₂ in 135 g of H₂O for 100 g of dried peach stone precursor) at 85 °C for seven hours with continuous stirring (no loss of water). Thereafter the temperature was raised to the boiling point of the solution and the solution concentrated to 33% of its original volume. The residue was filtered and dried at 110 °C for twelve hours.

Dried material (100 g) was introduced into a horizontal furnace in which a nitrogen flow was maintained (80 cm³/min) and the temperature was raised to 500 °C (2 °C/min), whereafter the temperature was kept at 500 °C for three hours. After cooling the residue was washed with diluted hydrochloric acid (7 %w) for ten minutes. This was repeated until complete elimination of zinc chloride was obtained (which was tested by the use of a NH₄OH/(NH₄)₂S solution). The sample was then washed with water and dried at 110 °C.

The washed and dried material (30 g) was thereafter activated in a furnace in which a carbon dioxide flow was maintained (80 cm³/min) by raising the temperature to 825 °C (5 °C/min), whereafter the temperature was kept at 825 °C for 150 h. Yield of activated carbon: 12% in respect to precursor. The resulting granular material had a bulk density of 0.36 g/cm³ and a surface area of 2500 m²/g.

### Example II

### Preparation of activated carbon from olive stones.

The same procedure was used to prepare activated carbon from olive stones as was described in Example I, except that an activation time of 111 h was used. Yield: 17%. The resulting granular product had a bulk density of 0.41 g/cm³ and a surface area of 2200 m²/g.

### Example III

### Preparation of activated carbon from almond shells.

The same procedure was used to prepare activated carbon from almond shells as was described in Example I, except that an activation time of 75 h was used. Yield: 18%. The resulting granular product had a bulk density of 0.43 g/cm³ and a surface area of 1900 m²/g.

### Example IV

### Testing of activated carbons.

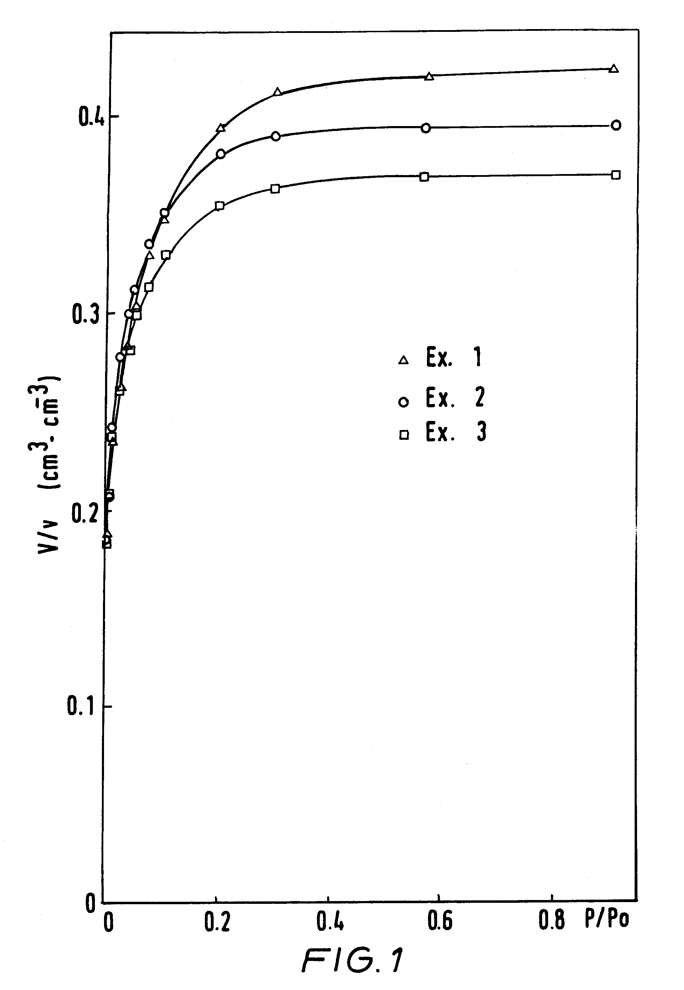

Figure 1 shows the characteristic isotherms for the materials of Examples I, II and III when tested for butane adsorption at 0 °C. The results are given as liquid volume per adsorbent bulk volume (V/v) vs fraction of saturated vapour pressure (P/Po).

### Example V (comparative)

Peach stones were prepared as described in Example I except that the stones were ground to an average particle size of 2.0-2.8 mm.

Dried particles (100 g) were impregnated with zinc chloride solution (200 g ZnCl₂ in 135 ml of water). After heating at 85 °C for 7 hours with continuous stirring, the mixture was boiled to dryness. The product was heated under nitrogen flow (80 cm³/min) at a final temperature of 700 °C for 2 hours. After cooling and washing with hydrochloric acid and water, a dry sample was obtained of bulk density 0.34 g/cm³ and a surface area of 1500 m²/g.

## Claims

1. Process for the preparation of activated carbon, comprising providing carbonaceous cellulose material in a form having an average particle size of 1 to 3 mm, treatment of the material with an aqueous zinc chloride solution containing 0.25 to 4 parts by weight of zinc chloride with respect to the amount of carbonaceous material, volume reduction of the mixture and carbonization in an inert atmosphere at 400-700 °C, removal of zinc chloride, and subsequent recovery of a dry granular activated carbon product, characterised in that in the volume reduction of the mixture 20-95 % of the amount of water is evaporated whereby an even distribution of the zinc chloride in the carbonaceous material is ensured.

2. Process according to claim 1, wherein the removal of zinc chloride is followed by activation at 700-1000 °C in an oxidizing atmosphere.

3. Process according to claim 2, wherein the activation is carried out in a carbon dioxide atmosphere.

4. Process according to claim 2 or 3, wherein the activation is carried out for 15-400 hrs.

5. Process according to any one of the preceding claims, wherein the carbonaceous cellulose material is selected from fruit pits and nut shells.

6. Process according to claim 5, wherein the carbonaceous cellulose material is selected from peach stones, olive stones and almond shells.

7. Process according to claim 6, wherein the carbonaceous cellulose material is peach stones.

8. Process according to any one of claims 1-7, wherein the carbonaceous cellulose material is washed with an acidic solution for 3-10 hours prior to zinc chloride treatment.

9. Process according to any one of claims 1-8, wherein the zinc chloride treatment is carried out at a temperature between 50 and 200 °C for 3-20 hour.

10. Process according to any one of claims 1-9, wherein the carbonization is carried out for 1-6 hours.

## Patentansprüche

1. Verfahren zur Herstellung von Aktivkohle, umfassend das Zur-Verfügung-Stellen von kohlenstoffhaltigem Cellulosematerial in einer Form mit einer durchschnittlichen Teilchengröße von 1 bis 3 mm, die Behandlung des Materials mit einer wäßrigen Zinkchloridlösung, enthaltend 0,25 bis 4 Gewichtsteile Zinkchlorid, bezogen auf die Menge an kohlenstoffhaltigem Material, die Volumenreduktion der Mischung und das Verkohlen in inerter Atmosphäre bei 400 bis 700°C, die Entfernung von Zinkchlorid und das anschließende Gewinnen eines trockenen granulatförmigen Aktivkohleprodukts, dadurch gekennzeichnet, daß bei der Volumenreduktion der Mischung 20 bis 95% der Wassermenge verdampft werden, wodurch eine gleichmäßige Verteilung des Zinkchlorids im kohlenstoffhaltigen Material sichergestellt wird.

2. Verfahren nach Anspruch 1, in welchem nach der Entfernung von Zinkchlorid eine Aktivierung bei 700 bis 1000°C in oxidierender Atmosphäre durchgeführt wird.

3. Verfahren nach Anspruch 2, in welchem die Aktivierung in einer Kohlendioxidatmosphäre durchgeführt wird.

4. Verfahren nach Anspruch 2 oder 3, in welchem die Aktivierung 15 bis 400 Stunden lang durchgeführt wird.

5. Verfahren nach einem der vorstehenden Ansprüche, in welchem das kohlenstoffhaltige Cellulosematerial ausgewählt ist aus Fruchtkernen und Nußschalen.

6. Verfahren nach Anspruch 5, in welchem das kohlenstoffhaltige Cellulosematerial ausgewählt ist aus Pfirsichkernen, Olivenkernen und Mandelschalen.

7. Verfahren nach Anspruch 6, in welchem das kohlenstoffhaltige Cellulosematerial Pfirsichkerne sind.

8. Verfahren nach einem der Ansprüche 1 bis 7, in welchem das kohlenstoffhaltige Cellulosematerial vor der Zinkchloridbehandlung 3 bis 10 Stunden lang mit einer sauren Lösung gewaschen wird.

9. Verfahren nach einem der Ansprüche 1 bis 8, in welchem die Zinkchloridbehandlung bei einer Temperatur zwischen 50 und 200°C über einen Zeitraum von 3 bis 20 Stunden durchgeführt wird.

10. Verfahren nach einem der Ansprüche 1 bis 9, in welchem die Verkohlung 1 bis 6 Stunden lang durchgeführt wird.

## Revendications

1. Procédé pour la préparation de charbon actif, qui comprend l'utilisation d'une matière carbonée à base de cellulose dans une forme ayant une grosseur moyenne de particules de 1 à 3 mm, le traitement de la matière avec une solution aqueuse de chlorure de zinc contenant de 0,25 à 4 parties en poids de chlorure de zinc par rapport à la quantité de matière carbonée, la réduction du volume du mélange et la carbonisation dans une atmosphère inerte à 400-700°C, l'élimination du chlorure de zinc et le recueil ultérieur d'un produit charbon actif granulaire sec, caractérisé en ce que dans la réduction du volume du mélange, une proportion de 20 à 95 % de la quantité d'eau est évaporée, de façon qu'une distribution uniforme du chlorure de zinc dans la matière carbonée soit assurée.

2. Procédé selon la revendication 1, dans lequel l'élimination du chlorure de zinc est suivie d'une activation à 700-1000°C dans une atmosphère oxydante.

3. Procédé selon la revendication 2, dans lequel l'activation est effectuée dans une atmosphère d'anhydride carbonique.

4. Procédé selon la revendication 2 ou 3, dans lequel l'activation est effectuée pendant 15 à 400 heures.

5. Procédé selon l'une quelconque des revendications précédentes, dans lequel la matière carbonée à base de cellulose est choisie parmi des graines de fruits et des coques de noix.

6. Procédé selon la revendication 5, dans lequel la matière carbonée à base de cellulose est choisie parmi des noyaux de pêches, des noyaux d'olives et des coques d'amandes.

7. Procédé selon la revendication 6, dans lequel la matière carbonée à base de cellulose consiste en noyaux de pêches.

8. Procédé selon l'une quelconque des revendications 1-7, dans lequel la matière carbonée à base de cellulose est lavée avec une solution acide pendant 3-10 heures avant le traitement par le chlorure de zinc.

9. Procédé selon l'une quelconque des revendications 1-8, dans lequel le traitement par le chlorure de zinc est effectué à une température comprise entre 50 et 200°C pendant 3-20 heures.

10. Procédé selon l'une quelconque des revendications 1-9, dans lequel la carbonisation est effectuée pendant 1-6 heures.
